# EUROPEAN PATENT SPECIFICATION

(11) **EP 0 973 373 B1**
(45) Date of publication and mention of the grant of the patent: **07.01.2004**
(21) Application number: 98913775.7
(22) Date of filing: 08.04.1998
(51) Int. Cl.: A01G 23/083

(54) **TO A WORKING MACHINE FIXED DEVICE FOR FELLING, CUTTING OFF AND DELIMBING A TREE**
AN EINER MASCHINE BEFESTIGTE EINRICHTUNG ZUM FÄLLEN,ZERSÄGEN UND AUSÄSTEN VON BÄUMEN
DISPOSITIF FIXE A UNE MACHINE SERVANT A L'ABATTAGE, AU TRON ONNAGE ET A L'EBRANCHAGE D'ARBRES

(30) Priority: 08.04.1997 FI 970180 U
(43) Date of publication of application: 26.01.2000
(73) Proprietor: SYRJA, Pekka, Topias, FIN-36600 Pälkäne (FI)
(72) Inventor: SYRJA, Pekka, Topias, FIN-36600 Pälkäne (FI)
(74) Representative: Nieminen, Taisto Tapani
(86) International application number: PCT/FI1998/000308
(87) International publication number: WO 1998/044779

(56) References cited:
- WO-A-89/12383
- DE-A- 2 618 717
- FI-B- 100 018
- SE-C- 411 415

## Description

The invention relates to a tree felling, crosscutting and delimbing device attachable to a working machine and fitted with a mobile boom, by means of which device delimbing can be performed utilizing the boom.

Previously known is delimbing of trees by utilizing the boom motion from patents FI-84219 and FI-89664. In these solutions delimbing has been complicated by the change of the delimbing tool position along with the boom motion. In changed position the limbing knives do not glide properly on the tree surface anymore but strive to penetrate the tree surface or get off it. In order to avoid this, the operator has all the time had to adjust the inclination of the boom to which the device is fixed in order to keep the limbing knives parallel to the tree.

The publication DE 26 18 717 discloses a felling, crosscutting and delimbing device, said device being coupled to a boom system in a vehicle by means of a joint and a turning arrangement so that the device can be adjustable turned around fitting joint into different angles depending on the used working phase. When the tree is delimbed the tree is moved through the delimbing knives by means of rotated feeding rollers which are pushed against the tree. Continuous mechanical control for the device is needed as well as the feeding rollers and rotation motors for rotating them.

Thanks to a device according to this invention the said disadvantages are avoided and the invention is characterized in what is presented in the characterizing portion of the independent claim.

The advantage of the invention is that during delimbing the device and the limbing knives remain parallel with the tree without producing any turning moments. Delimbing force can be conveyed to the limbing knives so that hardly any turning moments are produced . This is achieved by means of the branching body of the device, to which the delimbing tool can be fixed simply by two joints. Thus the delimbing device can always turn in the tree direction independent of the boom position.

In the following the invention is disclosed with reference to the enclosed drawing, where
Fig. 1 is a side view of tree delimbing.
Fig. 2 is the device felling a tree.
Fig. 3 is the branching body portion

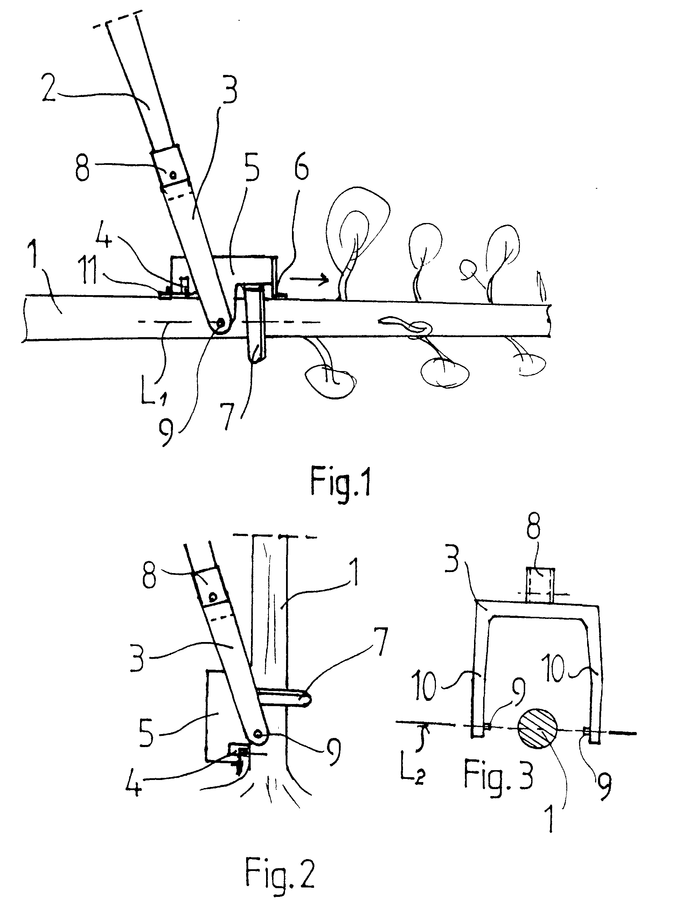

In figure 1 a tree is being delimbed with a device as per the invention fixed to the top of boom 2 in a working machine by means of a special adjusting part, for instance bushing 8. The device comprises a body with joints 9. On joints rests a tree-processing device 5, which can turn freely. In this figure the delimbing direction is to the right and the device has a limbing knife 6 and movable knives 7, known as such. The device has also a cutting tool 4. Powers generated by delimbing do not strive to turn device 5, when joint points 9 are on the same level L2 with the centre line of tree 1. Limbing knives 6 and 7 are so positioned that the tree between them seeks its place to level L2 or close to it. At least the centre line of the biggest trees that can be processed in the device are substantially in level L2.

Figure 2 shows a tree in felling position. Cutting is performed with cutting device 4. The centre of gravity of device 5 freely resting on joint points 9 is most suitably so arranged that device 5 takes its felling position or one close to it, for instance at a distance of 30° or closer to the final felling position. On taking the device to the butt, the device turns by itself in the tree direction, when the limbing knives 7 are, for instance, pressed around the tree.

Figure 3 shows the fork-like device body 3 with prongs 10 and joints 9 in their tips. Tree 1 is in felling position on line L2 running between joint points 9. The position of tree 1 is guided by limbing knives 6, 7 and possibly by other guides 11 beside felling tool 4 (figure 1).

Delimbing power parallel with the tree is brought by means of boom 2 to joint points 9 and, due to the position of joint points 9, the delimbing power is mainly parallel with the tree and moves thus device 5 in the direction of the tree.

Most suitably boom 2 is stiffly fixed to body portion 3 by means of adjusting piece 8. The application can also be made rotating, whereby body portion 3 can rotate around the longitudinal axle boom 2, for instance freely or by means of a rotating motor or activator.

In the presented solution device 5 rests freely on joint points 9. Thus, due the gravity, device 5 strives to turn so that the centre of gravity of device 5 would fall under joint points 9. For adjustment of device 5 position it is possible to mount also a hydraulic cylinder into an embodiment in order to turn device 5 in regard to body 8,10. Anyhow, by delimbing the cylinder is by means of a valve arrangement switched to move freely in order to realize the concept of this invention.

## Claims

1. A felling, crosscutting and delimbing device (5) for a tree (1) attachable to a boom assembly (2) of a working machine wherein the device (5) comprises a fork-like body (3) having prongs (10) and further between said prongs by means of joint coupling (9) the delimbing, felling and crosscutting tools (4,6,7) are placed, and by delimbing the tree (1) the line (L2) that runs through the joint points (9) of said joint coupling is also arranged to run through the tree (1), **characterized in that** said joint coupling (9) allows the tree-processing device (5) to turn freely, and is adapted to transmit the delimbing forces from the boom (2) to said device (5).

2. A device according to claim 1 **characterized in that** the line (L2) substantially runs through the tree (1) centre when delimbing the tree with the biggest suitable diameter for the device.

3. A device according to claim 1 **characterized in that** the free position determined by the centre of gravity of tools (4,6,7) resting on the joint coupling (9), or a position close to it, is the proper one suitable for tree felling.

## Patentansprüche

1. Ein Gerät (5) zum Fällen, Einschneiden und Entästen eines Baums (1), das an einem Ausleger (2) in einer Arbeitsmaschine angebracht werden kann, wobei das Gerät (5) einen gabelförmigen Rahmen (3) mit Armen (10) hat, und zwischen diesen Armen sind die Entästungs-, Fäll- und Einschneidewerkzeuge (4,6,7) mit Hilfe einer Gliederung (9) angebaut, und beim Entästen des Baums (1) ist auch die Linie (L2), die durch die Gliederungspunkte (9) der erwähnten Gliederung läuft, arrangiert durch den Baum (1) zu laufen, **gekennzeichnet dadurch, dass** die Gliederung (9) das Aufarbeitungsgerät (5) des Baums es frei sich zu bewegen lässt, und sie zur Übertragung der Entästungskräfte vom Ausleger (2) zum erwähnten Gerät (5) angepasst worden ist.

2. Ein Gerät gemäss Patentanspruch 1 **gekennzeichnet dadurch, dass** die Linie L2 wesentlich durch die Mitte des Baums (1) läuft, wenn Entästung des Baums mit möglichst grossen Durchmesser für das Gerät geschieht.

3. Ein Gerät gemäss Patentanspruch 1 **gekennzeichnet dadurch, dass** die von dem Schwerpunkt der Werkzeuge (4,6,7) bestimmte freie, auf die Gliederung gestützte Stellung, oder eine Stellung ziemlich nahe der Gliederung, die richtige Stellung für Baumfällen ist.

## Revendications

1. Dispositif (5) destiné à abattre, à tronçonner et à ébrancher un arbre (1), pouvant être attaché à la flèche (2) d'un engin mobile dans lequel le dispositif (5) comprend une structure en forme de fourche (3) ayant des dents (10) et, plus en avant, entre lesdites dents, les outils d'abattage, de tronçonnage et d'ébranchage (4, 6, 7) sont attachés par moyen de fixation par articulation (9) de manière à passer à travers l'arbre (1) ainsi que, lors de l'ébranchement de l'arbre (1), la ligne (L2) passant par les articulations (9) de ladite fixation, **caractérisé en ce que** ladite articulation (9) permet au dispositif (5) de maniement de l'arbre de tourner librement et est adaptée à la transmission des forces d'ébranchage de la flèche (2) audit dispositif (5).

2. Dispositif selon la revendication 1, **caractérisé en ce que** la ligne (L2) passe essentiellement par le milieu de l'arbre (1) lors de l'ébranchage de l'arbre ayant le plus grand diamètre pouvant passer dans le dispositif

3. Dispositif selon la revendication 1, **caractérisé en ce que** la position libre déterminée par le centre de gravité des outils (4, 6, 7) soutenus par la fixation par articulation, ou proche de ladite position, convient à la situation d'abattage d'un arbre.
